Europäisches Patentamt

European Patent Office

Office européen des brevets

(19)

(11) Publication number: **0 050 906**
**B1**

(12) **EUROPEAN PATENT SPECIFICATION**

(45) Date of publication of patent specification: **08.05.85**

(51) Int. Cl.⁴: **C 09 K 3/10,** E 04 B 1/68

(21) Application number: **81300341.5**

(22) Date of filing: **26.01.81**

(54) **Sealant compositions and seals which expand upon absorption of water and processes for their use.**

(30) Priority: **17.10.80 JP 145358/80**
**17.10.80 JP 145359/80**

(43) Date of publication of application:
**05.05.82 Bulletin 82/18**

(45) Publication of the grant of the patent:
**08.05.85 Bulletin 85/19**

(84) Designated Contracting States:
**AT BE CH DE FR GB IT LI NL SE**

(56) References cited:
**EP-A-0 037 717**
**DE-A-1 963 268**
**DE-A-2 157 975**
**GB-A-1 515 913**
**US-A-3 630 762**
**US-A-4 181 711**

(73) Proprietor: **HAYAKAWA RUBBER COMPANY LIMITED**
**1-32, Matsuhama-cho 2-chome**
**Fukuyama City (JP)**

(72) Inventor: **Ishido, Yoshinobu**
**132-1, Kaya Tsunogo-cho**
**Fukuyama City (JP)**
Inventor: **Tanaka, Hideo**
**645-1, Minamiteshiro-cho**
**Fukuyama City (JP)**

(74) Representative: **Ruffles, Graham Keith et al**
**MARKS & CLERK 57-60 Lincoln's Inn Fields**
**London WC2A 3LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# 0 050 906

## Description

This invention relates to sealant compositions and seals which expand upon absorption of water, and processes for their use.

More particularly, the invention is concerned with novel aqueously-swelling material which can be placed in joint or other gaps of structural members to fill and close the gap and stop water there. The material can thus be used to stop water in architectural, civil engineering or other public or private structures (generally referred to as "building structures", hereinafter) by using the material to fill a juncture gap or other gap of a concrete or metallic or other member of the building structure, so that when water flows into the gap, there is swelling to prevent water from seeping in or leaking out at the gap in the building structure.

In constructing building structures, numerous water sealants have been variously used which are made of rubber, plastics, asphalt or the like. Such water sealants of the prior art have shortcomings in that most of them have good adhesiveness but are too soft and sometimes sticky, and that their properties vary with temperature, for instance, they become too hard in winter. Besides, after being in use for a long period of time, the water sealants of the prior art often tend to lose their resiliency or to become subject to creep phenomenon, so that the water sealant becomes less adaptable to fluctuation in the structural gap and fails to maintain full water stopping ability.

It has been proposed recently to provide aqueously-swelling water-stopping compositions by adding aqueously-swelling organic substances to non-cross-linked rubber water seals to improve the water-stopping ability thereof. We consider that the proposed water-stopping compositions have some disadvantages in that, when the compounding ratio of the aqueously-swelling organic substance is low, sufficient water-stopping ability cannot be achieved, while if the compounding ratio thereof is too high, the dispersion of the aqueously-swelling organic substance in the rubber matrix becomes insufficient and the strength of the composition is considerably reduced. Besides, the aqueously-swelling organic substance is subject to hydrolysis, deterioration by oxidation, and decomposition, and its swelling ability tends to be weakened as the swelling and drying are repeated, and the residual low molecular weight components tended to cause poisonous effects.

Various new water seals are in recent use for joints of concrete preformed members in the field of civil engineering constructions, such as junctions of box culvert segments and concrete flumes. Such new water seals include, for instance, those made of soft resilient asphalt; semi-hard plastics cores enclosed by soft adhesive mainly consisting of atactic propropylene; foam rubber or foamed plastics, or the foregoing water seals provided with adhesive layers disposed on all or a part of the outer surfaces thereof.

In passing, it is to be noted that joint portions of pre-formed concrete members are often made in socket-and-plug type or male-female type. Such joint portions sometimes cause water leakage, because of insufficient dimensional accuracy in spite of substantial overall uniformity of dimensions, improper field work at a construction site, or uneven sinking of the land.

The aforesaid water seals mainly consisting of resilient soft asphalt or atactic polypropylene have such a temperature sensitivity that, in winter they become too hard and their workability is reduced, while in summer they become too soft and sticky so that their workability is reduced in summer too. The foam structure and compressibility of the foam rubber or foamed plastics of the aforesaid water seals of the prior art are such that the water stoppers cannot fully absorb the dimensional inaccuracy and unevenness of the concrete surfaces. Such insufficient workabilities and properties of materials have been causes of water leakage in the past.

With a view to obviating the aforesaid shortcomings and disadvantages of the prior art, the invention provides an aqueously-swelling sealant composition consisting essentially of 10 to 40 weight % rubber, 10 to 20 weight % of silicic compound, 10 to 60 weight % of bentonite, and 10 to 40 weight % of plasticizer. In an earlier copending European Patent Application No. 81301443.8 (Publication number 37717 published on 14 October 1981), we have described a similar composition wherein the main ingredient of the rubber is polyisobutylene. For the present invention, the main ingredient is reclaimed rubber. Thus, the present invention aims to provide economical water-sealant composition by allowing use of rubber whose main ingredient can be comparatively inexpensive reclaimed rubber, instead of expensive non-cross-linked organic virgin rubber, and by replacing for the filler a part of comparatively expensive silicic compound with inexpensive bentonite.

A simple form of the water seal of the present invention comprises an extruded member of the above-mentioned aqueously-swelling water-sealant composition, in the form of a bar, rope, string, strip, plate, or other form.

The invention also provides an aqueously-swelling seal which is characterized in that the water seal comprises at least one layer of aqueously-swelling water-sealant composition secured to an elongate core member having a high tensile strength.

The elongate core member having a high tensile strength can for example be made of hard rubber, hard plastics, metal, or a combination thereof, and can for example have the shape of a solid bar, hollow bar, rope-like form, or planar form. The layer of the aqueously-swelling water-sealant composition can be applied to the elongate core member so as partly or wholly to enclose the core member, and is preferably a composition in accordance with the invention.

2

**0 050 906**

Another embodiment of the present invention is an aqueously-swelling seal comprising an elongate core member with a high tensile strength, and at least two covering layers enclosing the core member, one of the covering layers being made of an aqueously-swelling sealant composition, and at least a part of an outermost layer of said covering layers being made of water-permeable resilient substance akin to a sponge.

In another embodiment of the present invention, an aqueously-swelling seal has an elongate core member, at least one layer of aqueously-swelling sealant composition secured to the outer surface of said core member, and an outer adhesive layer secured to at least part of the sealant layer.

The seals of the present invention can be used for stopping water at a gap in a building structure, or for sealing a gap in a building structure. The seal of the invention is placed in the gap of the building structure, whereby the seal swells upon absorbing water from the inside or outside of the structure so as to fill that portion of the gap where the water seal is placed. The water seal for this purpose may include a plurality of soft rubber layers enclosing a core member, and the aqueously-swelling water-sealant composition layer may be the outermost layer of said plurality of layers.

The aqueously-swelling water-sealant layer in the water seals of the invention is formed by using either of the following two compositions.

I. A composition consisting of
   10 to 40 weight % of rubber whose main ingredient is reclaimed rubber,
   10 to 20 weight % of silicic compound,
   10 to 60 weight % of bentonite, and
   10 to 40 weight % of plasticizer.

II. A composition consisting of
   10 to 40 weight % of rubber whose major rubber component is reclaimed rubber mixed with minor components of at least one non-cross-linked rubber which is butyl rubber, butyl halide rubber, polyisobutylene rubber, ethylene-propylene-diene terpolymer rubber or ethylene-propylene rubber;
   10 to 20 weight % of silicic compound,
   10 to 60 weight % of bentonite, and
   10 to 40 weight % of plasticizer.

The degree of swelling (as defined hereinafter) of the aqueously-swelling water-sealing composition can be adjusted in the DS range of 50 to 100% by suitably selecting the ingredients thereof.

The layer of the sealant composition can be integrally overlaid on a core member of foamed or non-foamed material by extruding the composition through a T-shaped head of an extruder while feeding the core member simultaneously.

The adhesive layer can be formed by using for example any of natural rubber adhesive, synthetic rubber adhesive, or acrylic resin adhesive.

To use the water seal, any release paper is peeled off and the water seal is attached or secured to a surface to be joined, and another surface to join is brought into and held in contact with the opposite surface of the water stopper by a suitable holding means. With a hollow core member made of foam rubber or the like, the aqueously-swelling water-sealant composition fills up most of the portions being joined, so that the aforesaid attaching of the water stopper alone can stop water at the joint.

When water is on one side of the water seal, and even if water leaks in the beginning due to some difficulty, the aqueously-swelling water-sealant compositions swell as time elapses, and the water leakage is usually completely stopped in a few hours.

The compositions of the present invention can be regarded as employing three kinds of component; i.e. component (A) consisting of reclaimed rubber or a mixture of reclaimed rubber as main ingredient and a suitable amount of other rubber, especially a non-cross-linked rubber; components (B) consisting of silicic compound and bentonite; and component (C) consisting of plasticizer.

As regards the component (A), the reclaimed rubber can be reclaimed butyl rubber, reclaimed tire rubber, or the like; and the other rubber can be a partly or non-cross-linked rubber, for instance, natural rubber, styrene-butadiene copolymer rubber, ethylene-propylene-diene terpolymer rubber, isoprene rubber, acrylonitrile-butadiene copolymer rubber, acrylic rubber, ethylene-propylene rubber, chloroprene rubber, butyl rubber, or butyl halide rubber. Among the aforesaid other rubbers, the preferred rubbers are butyl rubber, butyl halide rubber, polyisobutylene, ethylene-propylene-diene terpolymer rubber, and partly-cross-linked butyl rubber. Any of the aforesaid rubbers may be used alone, or an arbitrary mixture of any two or more of them may be used in the present invention.

The rubber used in a preferred embodiment is the aforesaid reclaimed rubber alone or a mixture of the reclaimed rubber and 10 to 30 weight % of non-crosslinked virgin rubber.

As regards the components (B), the silicic compound (white carbon) which is used can be silicic acid anhydride (dry white carbon), hydrous silicic acid (wet white carbon), or a silicate (white carbon) such as calcium silicate. Any of the aforesaid silicic compounds (white carbons) can be used alone, or a mixture of two or more compounds thereof can be used in the present invention.

Bentonite has montmorillonite as main ingredient and contains quartz, feldspar, and calcite. The major

3

components of bentonite are silicon dioxide ($SiO_2$) and aluminium oxide ($Al_2O_3$). Benzonite is characterized by its properties of absorbing water and swelling to a great extent.

As regards the plasticizer, the component (C), it is necessary to make selection to a certain extent depending on the type of rubber being used, but in general, it is possible to use mineral oil softeners, vegetable oil softeners, fatty acid, fat and oil, esters, phosphates, paraffinic derivatives, and the like plasticizing materials. Examples of the plasticizer are paraffinic mineral oils, naphthenic mineral oils, aromatic mineral oils, stearic acid, palmitic acid, castor oil, cotton seed oil, rapeseed oil, paraffin, paraffin chloride, dioctyl phthalate, dioctyl adipate, dibutyl sebacate, tricresyl phosphate, liquid chloroprene, liquid polyisobutylene, liquid polybutadiene and liquid polybutene.

The aqueously-swelling water-sealant compositions of the present invention comprise the aforesaid ingredients, and the compounding ratio of the ingredients is somewhat modifiable so as to meet the requirements of each application. Preferably, the weight percents of the ingredients in the compositions of the invention in terms of (rubber) : (silicic compound filler) : (bentonite filler) : (plasticizer) are in the range of (10—40) : (10—20) : (10—60) : (10—40).

In the aforementioned compounding ratios, if the quantity of the silicone compound filler is less than 10 weight %, the degree of swelling by water absorption (referred to as "aqueous swelling") is small and sufficient water-sealing effect cannot be achieved. On the other hand, if the quantity of the silicic compound filler exceeds 20 weight %, the shaping of the composition becomes difficult and the resultant composition becomes unduly brittle.

If the quantity of the bentonite filler is less than 10 weight %, the degree of aqueous swelling of the composition becomes too small to achieve the desired water-sealing effect, while the bentonite filler in excess of 60 weight % is not desirable because the composition becomes too fragile after the aqueous swelling.

The kind and amount of the plasticizer can be adjusted so as to produce proper hardness of the composition which meets specific needs of each application. It is not desirable to make the composition of rubber too hard because such compositions result in a small degree of aqueous swelling, cause difficulty in achieving the flatness of overlapped joint portions, and necessitate a large force for tightening. Excessive amount of the plasticizer is not desirable, because it tends to cause a low shaping workability, low processing workability due to the high deformability thereof, and low resistance against water pressure.

In addition the aforementioned ingredients, it is possible to use conventional ingredients, such as inorganic fillers, age resistors, tackifiers, lubricants, and the like known additives.

The ingredients are suitably mixed using an ordinary rubber mixer such as a mixing mill, a kneader, or a Banbury mixer. A suitable shaping machine is an extruder or a calender roller. The shaping of the composition of the invention can be carried out in a manner similar to that of the conventional water seal made of rubber.

The preferable degree of swelling ("DS") of the compositions of the invention is 25% or more. The degree of swelling is determined by the following formula.

$$\text{Degree of swelling (\%)} \quad \frac{W_{24}-W_0}{W_0} \times 100$$

here, $W_0$ is the weight under dry condition, and $W_{24}$ is the weight after being dipped for 24 hours in water from a public water supply.

As described above, the composition of the invention comprises three kinds of components; namely, the component (A) whose main ingredient is reclaimed rubber; the components (B) silicic component added with a large amount of bentonite; and the component (C) plasticizer, and the water-absorbing substance is well dispersed in the rubber matrix. The strength of the composition should not deteriorate even after long years of use. The degree of swelling of the typical aqueously-swelling water-sealant compositions of the invention is not reduced even after repeated swelling and drying, and the degree of swelling thereof is not affected by the presence of hard water. The ingredients of the compositions of the invention are free from deterioration and rotting, so that the compositions can be highly durable. Furthermore, the compositions of the invention need not contain any water-soluble ingredients, so that there is no risk of causing any poisonous effects.

The compositions of the invention will now be illustrated by referring to Examples, wherein parts of quantity refer to parts by weight. Reference Examples are also given. The present invention is not restricted to the Examples.

As regards the starting materials used in the Examples, rubbers, silicic compounds, bentonite, and plasticizer were available on the open market. For the reclaimed rubbers, tire rubber was treated and prepared in the following manner. Used butyl rubber tubes were purchased and pulverized, and the pulverized small particles were agitated and mixed with petroleum mineral oil, placed in an autoclave, heated by directly applying steam thereto, and desulphurized. The desulphurized rubber was kneaded several times using a mixing mill and then re-plasticized to obtain the desired reclaimed butyl rubber.

Example 1

An aqueously-swelling water-sealant composition consisting of the following ingredients was prepared by kneading in a mixing mill:

| | |
|---|---|
| Reclaimed butyl rubber | 25 parts |
| Polyisobutylene (Vistanex L-100, made by Esso Co. USA) | 5 parts |
| Hydrous silicic acid (Nipsi NV-3, made by Nippin Silica Co. Ltd, Japan) | 18 parts |
| Bentonite (Kunigel, made by Kunimine Kogyo Co. Ltd, Japan) | 30 parts |
| Polybutene (HV-300, made by Nisseki Jushikagaku Co. Ltd. Japan) | 5 parts |
| Naphthenic mineral oil (Diana Process Oil KL-1, made by Idemitsu Kosan Co. Ltd. Japan) | 17 parts |

The kneaded composition was extruded into a strip water seal with a cross section of 4 mm by 20 mm, by using an extruder. The extruded strip material had a DS, degree of aqueous swelling, of 80.6%.

The seal was placed in a flange gap of a test vessel, with flange gap adjusted to be 5 mm. When water was poured in the test vessel, the water leaked in the beginning, because the 4 mm thick water seal did not fill up the 5 mm flange gap. Despite the water leakage, water was continuously poured into the test vessel, and in 2 hours, the amount of water leakage through the flange gap began to be reduced, and after 3 hours, the water leakage was stopped and the water seal withstood a water pressure of 3 kg/cm$^2$.

Example 2

An aqueously-swelling water-sealant composition consisting of the following ingredients was prepared by kneading in a mixing mill:

| | |
|---|---|
| Reclaimed butyl rubber | 10 parts |
| Polyisobutylene | 20 parts |
| Hydrous silicic acid | 15 parts |
| Bentonite | 35 parts |
| Polybutene | 5 parts |
| Naphthenic mineral oil | 15 parts |

The kneaded composition was extruded into a strip with a cross section of 4 mm by 20 mm, by using an extruder. The DS of the composition was 114.5%.

Example 3

An aqueously-swelling water-sealing composition having the following ingredients was prepared by kneading in a mixing mill:

| | |
|---|---|
| Reclaimed tire rubber | 15 parts |
| Polyisobutylene | 10 parts |
| Butyl rubber (Polyisoprene-isobutylene rubber no. 268, made by Nippon Butyl Co. Ltd. Japan) | 10 parts |
| Hydrous silicic acid | 15 parts |
| Bentonite | 40 parts |
| Polybutene | 10 parts |

5

# 0 050 906

The kneaded composition was extruded into a strip seal using an extruder. The DS of the composition was 82.7%.

Example 4

An aqueously-swelling water-sealant composition was prepared from the following ingredients by kneading in a mixing mill:

| | |
|---|---|
| Reclaimed tire rubber | 20 parts |
| Polyisobutylene | 10 parts |
| Hydrous silicic acid | 10 parts |
| Bentonite | 40 parts |
| Polybutene | 10 parts |
| Paraffinic mineral oil (Diana Process Oil MM-45, made by Idemistu Kosan Co. Ltd, Japan). | 10 parts |

The kneaded composition was extruded into a strip using an extruder. The DS of the composition was 92.3%.

Example 5

An aqueously-swelling water-sealant composition consisting of the following ingredients was prepared by kneading in a mixing mill:

| | |
|---|---|
| Reclaimed butyl rubber | 20 parts |
| Butyl rubber | 10 parts |
| Hydrous silicic acid | 10 parts |
| Bentonite | 45 parts |
| Naphthenic mineral oil | 10 parts |
| Paraffinic mineral oil | 5 parts |

The kneaded composition was extruded into a strip using an extruder. The DS was 105.8%.

Example 6

An aqueously-swelling water-sealant composition consisting of the following ingredients was prepared by kneading using a mixing mill:

| | |
|---|---|
| Reclaimed butyl rubber | 15 parts |
| Polyisobutylene | 5 parts |
| Styrene-butadiene copolymer rubber (SBR No. 1507, made by Nippon Goseigomu Co. Ltd. Japan) | 10 parts |
| Hydrous silicic acid | 20 parts |
| Bentonite | 30 parts |
| Polybutene | 5 parts |
| Aromatic mineral oil (Diana Process Oil AH-10, made by Idemitsu Kosan Co. Ltd, Japan) | 15 parts |

The kneaded composition was extruded into a strip using an extruder. The DS was 100.2%.

6

Example 7

An aqueously-swelling water-sealant composition consisting of the following ingredients was formed by kneading in a mixing mill:

| | |
|---|---|
| Reclaimed butyl rubber | 20 parts |
| Polyisobutylene | 5 parts |
| Natural rubber (RSS No. 3) | 10 parts |
| Calcium silicate (Starlex L, made by Kamishima Kagaku Co. Ltd. Japan). | 10 parts |
| Bentonite | 40 parts |
| Polybutene | 5 parts |
| Naphthenic mineral oil | 10 parts |

The kneaded composition was extruded into a strip using an extruder. The DS was 95%.

Example 8

An aqueously-swelling water-sealant composition consisting of the following ingredients was prepared by kneading in a mixing mill:

| | |
|---|---|
| Reclaimed butyl rubber | 10 parts |
| Polyisobutylene | 10 parts |
| Ethylene-propylene-diene terpolymer (EPT No. 1045, made by Mitsui Sekiyukagaku Co. Ltd Japan) | 10 parts |
| Hydrous silicic acid | 15 parts |
| Bentonite | 30 parts |
| Polybutene | 25 parts |

The kneaded composition was extruded into a strip by an extruder. The DS of the composition was 86.6%

Example 9

An aqueously-swelling water-sealant composition consisting of the following ingredients was made by kneading in a mixing mill:

| | |
|---|---|
| Reclaimed butyl rubber | 10 parts |
| Polyisobutylene | 15 parts |
| Acrylonitrile-butadiene copolymer (N-230S, made by Nippon Goseigomu Co. Ltd. Japan | 10 parts |
| Bentonite | 30 parts |
| Calcium silicate | 15 parts |
| Polybutene | 10 parts |
| Dioctyl phthalate (D.O.P., made by Kyowa Hakko Co. Ltd. Japan) | 10 parts |

The kneaded composition was extruded into a strip water seal by using an extruder. The DS, degree of aqueous swelling, of the water-sealant composition was 92.1%.

0 050 906

Reference Example 1

A composition consisting of the following ingredients was made by kneading using a mixing mill:

| | |
|---|---|
| Reclaimed butyl rubber | 15 parts |
| Polyisobutylene | 15 parts |
| Hydrous silicic acid | 22 parts |
| Bentonite | 18 parts |
| Polybutene | 30 parts |

The kneaded composition was extruded into a strip water stopper with a cross section of 4 mm by 20 mm, using an extruder. The DS of the composition was 40%.

The strip was placed in a flange gap of a test vessel so as to extend over the entire length of the flange gap, with flange gap adjusted to be 5 mm. When water was poured into the test vessel, the water leaked because the 4 mm thick strip did not fill up the 5 mm flange gap. Despite the leakage, water was continuously poured into the test vessel, and in the case of the composition of this Reference Example 1, the water leakage was not stopped even after 20 hours of water pouring.

Reference Example 2

A composition having the following ingredients was made by kneading in a mixing mill:

| | |
|---|---|
| Reclaimed butyl rubber | 10 parts |
| Polyisobutylene | 20 parts |
| Hydrous silicic acid | 30 parts |
| Polybutene | 20 parts |
| Naphthenic mineral oil | 20 parts |

The kneaded composition was extruded into a strip with a cross section of 4 mm by 20 mm, by using an extruder. The DS, degree of aqueous swelling, of the composition was 49.2%.

The strip was placed in a flange gap of a test vessel so as to extend over the entire length of the flange gap, with flange gap adjusted to be 5 mm. When water was poured into the test vessel, the water leaked because the 4 mm thick strip did not fill up the 5 mm flange gap. Despite the leakage, water was continuously poured into the test vessel, and in the case of the composition of this Reference Example 2, the leakage was not stopped after 20 hours of water pouring.

Reference Example 3

A composition consisting of the following ingredients was made by kneading in a mixing mill:

| | |
|---|---|
| Reclaimed butyl rubber | 5 parts |
| Polyisobutylene | 15 parts |
| Hydrous silicic acid | 5 parts |
| Bentonite | 70 parts |
| Naphthenic mineral oil | 5 parts |

The kneaded composition was extruded into a strip with a cross section of 4 mm by 20 mm, using an extruder. The DS was 180%. Although the composition of this Reference Example 3 had a high degree of aqueous swelling, the physical properties of the composition were so poor after aqueous swelling that the composition was found unsuitable for practical use.

Water seals of the present invention will now be illustrated with non-limiting examples by referring to the accompanying drawings.

Figures 1 to 6 are perspective views of seals of the invention, which are formed by wholly or partly enclosing solid core members with aqueously-swelling water-sealant compositions;

Figures 7 to 10 are perspective views of seals of the invention, which are made by enclosing hollow core members with aqueously-swelling sealant compositions;

8

**0 050 906**

Figures 11 to 19 are sectional views of solid or hollow seals according to the present invention of multi-layer construction and which have partial or complete adhesive layers and/or water-permeable resilient layers;

Figure 20 is a perspective view showing a water seal according to the present invention having a rectangular hollow core member, a pair of water-sealant composition layers secured to opposed surfaces of the core member, and an adhesive layer overlaid on the outside surface of one of the sealant layers;

Figures 21 to 30 are diagrammatic illustrations of structural joints where the process of sealing according to the present invention can be used.

Like parts are designated by like numerals and symbols throughout different views of the drawings.

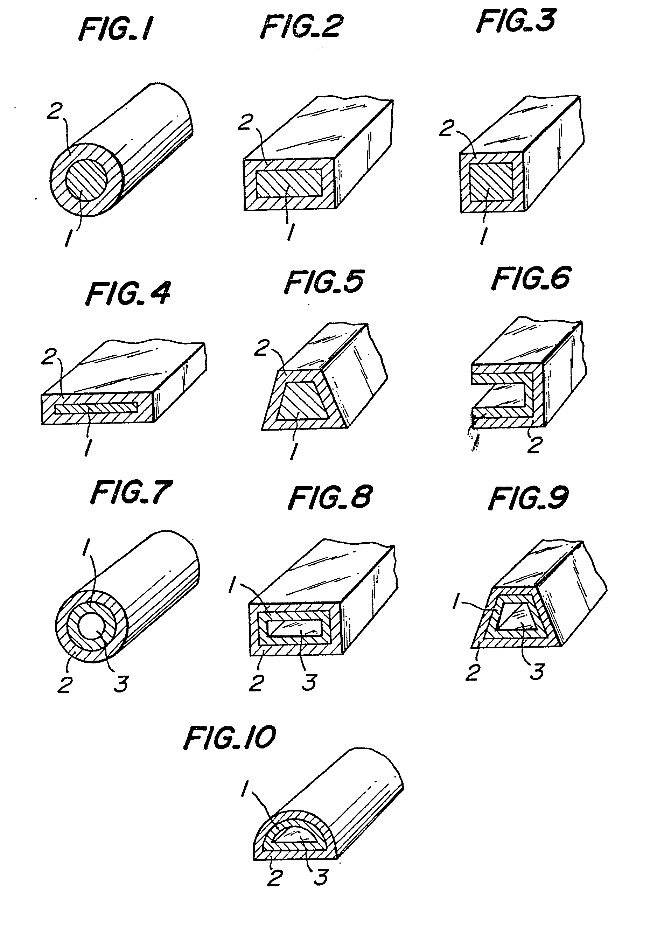

Figures 1 to 6 show water seals of the invention, each of which comprises an elongate solid core member 1 with a high tensile strength and a layer 2 of aqueously-swelling water-sealant composition partly or wholly enclosing the core member. As will be apparent, the cross-section of the water seal can be of any suitable shape, such as circular, rectangular, square, planar, trapezoidal, or U-shape. The layer 2 is for example made of an aqueously-swelling water-sealant composition of the invention, such as one which has been described in detail in the foregoing Examples 1 to 10.

The elongate core member 1, which is of string- or rope-like shape in the embodiment of Figures 1 to 6, has a high tensile strength and can be made of hard rubber, hard plastics, metal, or a combination thereof.

Figures 7 to 10 illustrate further embodiments of the water seals according to the present invention, each of which comprises a hollow core member 1 with an inner hollow portion 3 and a layer 2 of the aqueously-swelling water-sealant composition enclosing the core member 1. As the figures show, the shape of the water seal can for instance be circular, rectangular, trapezoidal, or semi-circular.

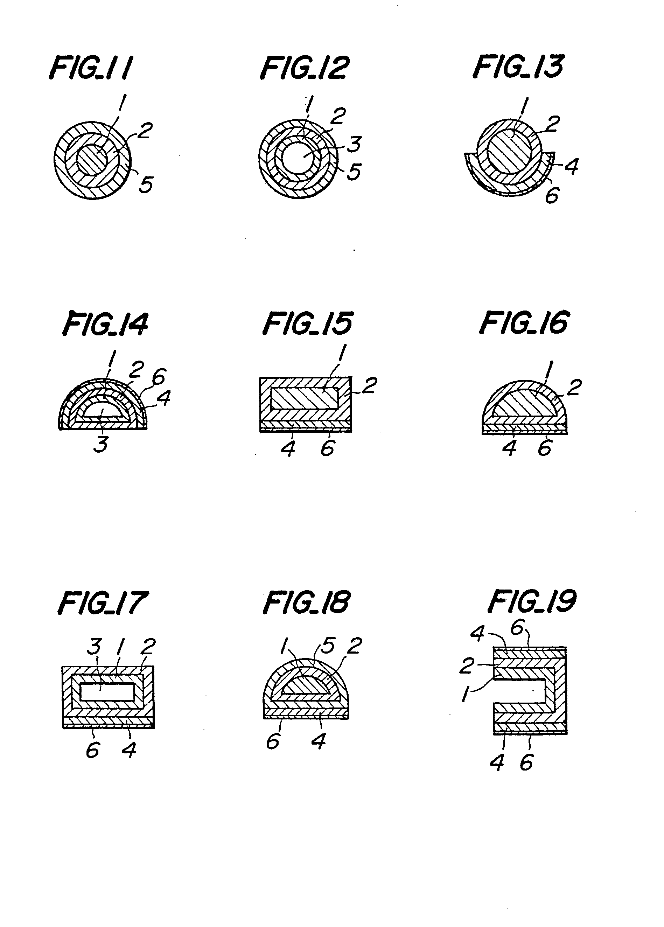

Figures 11 to 18 show various embodiments of multi-layer constructions of the aqueously-swelling water seals according to the invention. In the embodiment of Figure 11, a layer 2 of the aqueously-swelling water-sealant composition surrounds the outer circumference of a solid core member 1, and a water-permeable resilient layer 5 such as a sponge rubber layer is applied to the outer surface of the water-sealant composition layer 2. The outermost layer 5 is made water-permeable, so that water may seep into the inside thereof and cause the aqueously-swelling water-sealant composition layer 2 to swell.

Figure 12 shows a construction comprising a hollow circular core member 1 with a central hollow portion 3, an aqueously-swelling water-sealant composition layer 2 surrounding the outer surface of the core member 1, and an outermost layer 5 of water-permeable resilient substance enclosing the water-sealant layer 2.

In the embodiment of Figure 13, an aqueously-swelling water-sealant composition layer 2 surrounds a solid core member 1 with a circular cross section, and an adhesive layer 4 is secured to one half of the outer circumference of the water-sealant composition layer 2. Thus, the adhesive layer 4 covers only one half of the circumference of the layer 2, so that the adhesive layer 4 does not seal the aqueously-swelling composition layer 2 nor interfere with the swelling thereof. A release paper 6 is provided on the outer surface of the adhesive layer 4.

In general, when an adhesive layer 4 is provided on the water seal, the water seal can be secured tightly to the joint portion without applying any primer or separate adhesive thereto, whereby the time necessary to make the joint can be considerably shortened as compared with that of the prior art.

In the construction of Figure 14, an aqueously-swelling water-sealant composition layer 2 encloses the circumferential surface of a hollow core member 1 with a semi-circular cross section, and an adhesive layer 4 is provided on the semi-circular arcuate outer surface of the layer 2. A release paper 6 is attached to the adhesive layer 4.

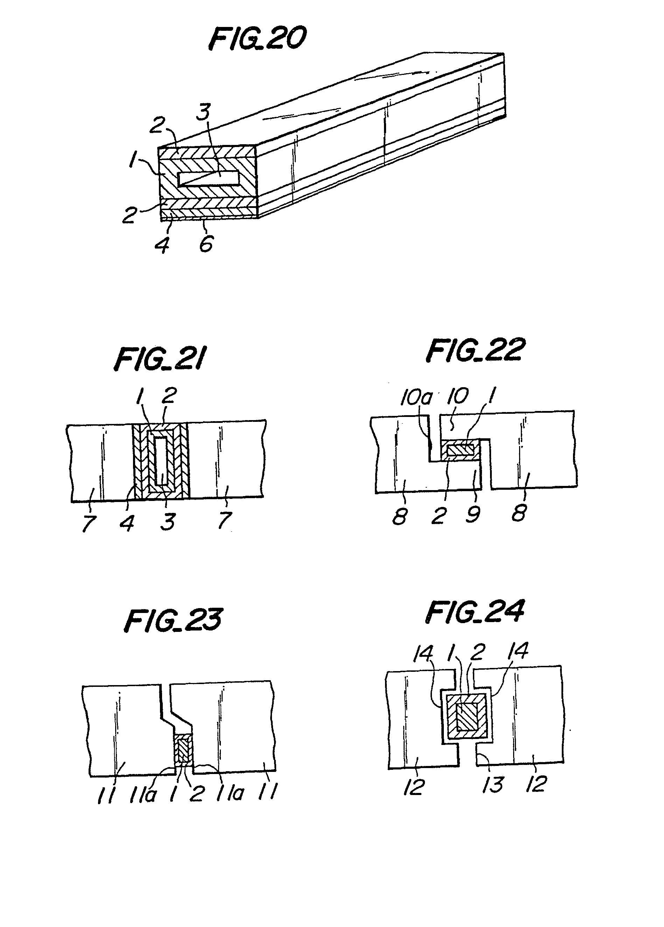

Figures 15 and 16 show water seals having solid core members 1 with rectangular and semi-circular cross sections whose entire outer surfaces are covered by aqueously-swelling water-sealant composition layers 2. An adhesive layer 4 with a release paper 6 is provided on one planar side surface of each of the water seals.

In the construction of Figure 17, the outer peripheral surface of a hollow rectangular core member 1 is covered by an aqueously-swelling water-sealant composition layer 2, and an adhesive layer 4 with a release paper 6 is secured to a portion of the outer surface of the layer 2.

Figure 18 shows a water seal having a solid core member 1 with a semi-circular cross section, which core member 1 is enclosed by two layers including an inner layer 2 of the aqueously-swelling water-sealant composition and an outer layer 5 of water-permeable sponge-like resilient substance. An adhesive layer 4 with a release paper 6 is provided on a part of the outer surface of the outer layer 5.

Figure 19 shows a construction using a U-shaped core member 1 made of hard rubber. An aqueously-swelling water sealant composition layer 2 is secured to the outer surface of the core member 1 while leaving the open end of the U-shaped core member 1 uncovered. Two adhesives layers 4, 4 with release papers 6, 6 are provided on opposite outer surfaces of the layers 2.

In another embodiment of the water seal, Figure 20, a rectangular core member 1 has a hollow portion extending along the longitudinal central axis thereof, which core member is made of foam rubber or the like. A pair of planar layers 2, 2 of the aqueously-swelling water-sealant composition are secured to opposite surfaces of the core member 1. An adhesive layer 4 having a release paper 6 is applied to the outside surface of one of the two water-sealant composition layers 2, 2.

In the water seal of Figure 20, the hollow core member 1 is made of foam rubber or the like foamed

9

material, so that the hollow core member 1 can absorb most of dimensional differences at joint portions and most of undulations on concrete surfaces, by the compression and expansion of the core member 1. Minor gaps between the water seal surfaces and concrete surfaces can be filled by the swelling of the aqueously-swelling water-sealant composition of the water seal of the invention when the seal absorbs water from the outside thereof. Thus, the water seal of this case has dual water-stopping functions.

A continuous hollow core member 1 of foam rubber is disposed at the central portion of the water seal can be made by mixing a foaming agent and a vulcanizing agent in a regular rubber composition, extruding the mixture thus prepared, and passing the extruded body through a suitable heating chamber. The material of the foamed hollow core member can be a suitable synthetic resin, such as polyethylene.

The release paper 6 used in the constructions of Figures 13 to 20 is to be removed from the adhesive layer 4 just before the use at site, so as to expose the adhesive layer 4 and to facilitate the securing of the water seal to the surface of concrete or metallic structural members.

The water seal of Figure 20 is particularly suitable for stopping water at joints of concrete structural members or the like. More particularly, the seal of Figure 20 can be easily applied to structural members, and the material of the resilient core member 1 thereof, such as foam rubber, facilitates filling of large part of gaps in the joint portion of the structural members by the compressive force thereof, and when water reaches the seal of the invention, the aqueously-swelling water-sealant composition layer 2 absorbs water and swells, so as to stop water more effectively and prevent water leakage. Thus, the invention contributes greatly to the formation of watertight joints.

Figures 21 to 30 show processes of stopping water at junctions of various structural members of building structures, such as architectural and civil engineering structures, by using water seals of the aqueously-swelling water-sealant compositions of the present invention.

Figure 21 shows a flat or abutting joint of concrete decks, wherein the joint is made by abutting one edge of a concrete deck 7 to the corresponding edge of another concrete deck 7. In this case, if the adhesive layer 4 is provided on at least one surface of the water stopper as shown in Figure 17, the field work is considerably simplified. More particularly, just before the work at site, the release paper 6 is peeled off from the adhesive layer 4, and the exposed adhesive layer 4 is attached to the edge surface of the one concrete deck 7 so as integrally to secure the water seal to the concrete deck 7, whereby the work of abutting the other concrete deck 7 to the water stopper can be carried out easily and safely.

In this case, if the adhesive layers 4 are provided on opposite surfaces of the aqueously-swelling water-sealant composition layer 2 of the water seal, the field work can be further simplified.

In this case, the water-stopping effect of the flat joint can be achieved solely by the aqueously-swelling water-sealant composition of the water seal of Figure 2, 8, or 15, which water seal is inserted at the flat joint of the adjacent concrete decks 7. Thus, although the adhesive layers 4 contribute to the improvement of the workability of the water seals, the adhesive layers 4 can be dispensed with in principle as far as the water-sealant effect is concerned. Nevertheless, the provision of the adhesive layers 4 apparently improves the bondage of the seals with the concrete body surfaces.

Figure 22 shows a process of stopping water at joints of Hume pipes. A water seal of the aqueously-swelling water-sealant composition of the present invention is inserted in a space 10a between an inner annular edge portion 9 and outer annular edge portion 10 of adjacent Hume pipes 8, 8 being joined. The seal of this embodiment can be either one of the water seals of Figures 1 to 6 having a solid core member 1 enclosed by the aqueously-swelling water-sealant composition layers 2 or the water seals of Figures 7 to 10 having the hollow core members 1 enclosed by the aqueously-swelling water-sealant composition layers 2.

If the water seals having an adhesive layer 4 secured to one outside surface of the aqueously-swelling water-sealant composition layer 2 as shown in any of Figures 15, 16, 17 and 18 are used, and if such water seal is secured to the outer surface of the inner annular edge portion 9 of one Hume pipe 8 by using the adhesive layer 4, the work of joining the Hume pipes can be smoothly carried out, because the inner surface of the outer annular edge portion 10 of the other Hume pipe 8 slidably touches the water seal at a portion where no adhesive layer is provided. Thus, the provision of the adhesive layer 4 at only one side of the water seal is advantageous in the case of the pipe joint of Figure 22 or the like.

Figure 23 shows the use of a water seal at a joint between edge surfaces 11a, 11a of adjacent box culvert segments 11, 11. In this case, the water seal is simply compressed by the two edge surfaces being joined, and the water seal is free from twisting or shearing of Figure 22. Accordingly, it is preferable to have adhesive layers 4 at opposite surfaces of the water seal as shown in Figure 19. Although any one of the water stoppers shown in Figures 1 to 20 can be used in the case of the joining of box culvert segments, the water seal of Figure 19 having the adhesive layers 4 provided at opposite surfaces thereof is preferable, because such adhesive layers 4 improve the workability at the construction site.

Figure 24 shows the use of a water seal at a joint between the abutting edge surfaces 13, 13 of adjacent air-entrained concrete (ALC) boards 12, 12. In this case, grooves 14 are formed on the opposing edge surfaces 13, to receive the water seal. Again, any one of the water seals shown in Figures 1 to 20 can be used in the abutting joint between the air-entrained concrete boards 12. However, the water seal with the hollow core member 1 and one or two adhesive layers 4 is preferable for use in the case of Figure 24, especially for facilitating absorption of pressure.

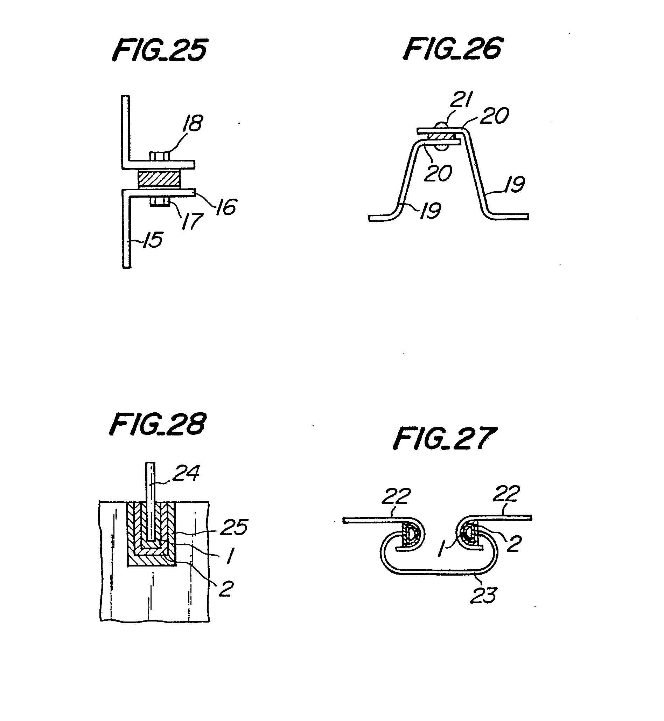

Figure 25 shows the manner in which water is stopped at the junction of flanges 16 of a water tank or a metal vessel 15 by inserting a water seal therebetween. In this case, any of the water seals shown in Figures 2, 3, 4, 8, 15, 17, and 20 can be inserted between the two flanges 16, 16 and the two flanges are tightened together by bolts 17 and nuts 18. The junction of the two flanges 16, 16 is watertightly closed by the aqueously-swelling water-sealant composition of the invention upon tightening by the bolts 17 and nuts 18. The water seal for this purpose may have one or two adhesive layers on one or two side surfaces thereof.

Figure 26 shows the joining of flanges 20, 20 of folded roof plates 19, 19 by placing a water seal of the invention between such flanges and inserting a rivet 21 therethrough, which rivet 21 is then caulked to fasten the two folded plates 19, 19 together. The water seal for this purpose can be similar to that of Figure 25.

Figure 27 shows the manner in which a splice plate 23 is watertightly placed between adjacent sheet piles 22 by inserting a water seal of the invention at each junction of the splice plate 23 with the sheet pile 22. For the junction of Figure 27, a water seal having a semi-circular cross section as shown in Figures 10, 13, 14 and 16 is preferable. Besides, the water seal with circular cross sections may be also used in this case.

Figure 28 shows insertion of a water seal of the invention into the joint between a grooved sash frame 25 and a plate 24 to be held thereby. In this case, a water seal having a U-shaped cross section as shown in Figures 6 and 19 is preferable.

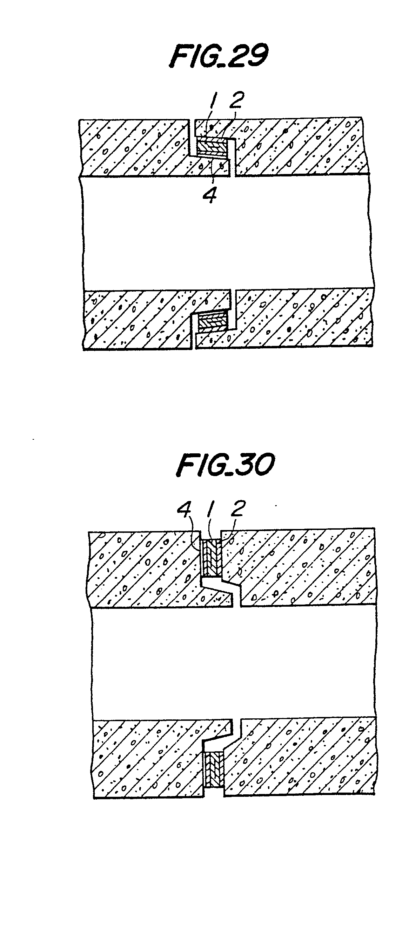

Figures 29 and 30 show joint portions between adjacent Hume pipes and between adjacent box culvert segments, wherein hollow water seals with adhesive layers as shown in Figure 20 are used.

**Claims**

1. An aqueously-swelling water-sealant composition for use in stopping water at a gap in a building structure, the composition comprising 10 to 40 weight % of rubber whose main ingredient in reclaimed rubber, 10 to 20 weight % of silicic compound, 10 to 60 weight % of bentonite, and 10 to 40 weight % of plasticizer.

2. An aqueously-swelling water-sealant composition for use in stopping water at a gap in a building structure, the composition comprising 10 to 40 weight % of rubber whose major rubber component is reclaimed rubber mixed with minor components of at least one non cross-linked rubber which is butyl rubber, butyl halide rubber, polyisobutylene rubber, ethylene-propylene-diene terpolymer rubber or ethylene-propylene rubber; 10 to 20 weight % of a silicic compound; 10 to 60 weight % of bentonite; and 10 to 40 weight % of a plasticizer.

3. A composition as defined in claim 1, wherein the reclaimed rubber comprises reclaimed butyl rubber or reclaimed tire rubber.

4. A composition as defined in claim 1, 2, or 3 wherein the silicic compound includes at least one of silicic acid anhydride, hydrous silicic acid, and calcium silicate.

5. A composition as defined in claim 1, 2, 3 or 4, wherein the plasticizer is a plasticizer for reclaimed rubber.

6. An extruded aqueously-swelling water seal for use in stopping water at a gap in a building structure and made with a composition according to any preceding claim.

7. A water seal for use in stopping water at a gap in a building structure, the seal comprising an elongate core member having a high tensile strength, and at least one partial or complete layer of aqueously-swelling water-sealant composition, wherein the aqueously-swelling water-sealant composition is a composition according to any of claims 1 to 4.

8. A seal as defined in claim 7, wherein in the elongate core member is made of one or more of hard rubber, hard plastics, foam rubbers, or foamed plastics.

9. A seal as defined in claim 7 or 8, wherein the elongate core member is solid and has a cross section which is circular, semi-circular, square, rectangular, trapezoidal, or U-shaped.

10. A seal as defined in claim 7 or 8, wherein the elongate core member is hollow and has a cross-sectional outer periphery which is circular, semi-circular, square, rectangular, trapezoidal, or U-shaped.

11. A seal as defined in any of claims 7 to 10, wherein the elongate core member is enclosed by the aqueously-swelling water-sealant composition layer.

12. A seal as defined in any of claims 7 to 10, wherein the elongate core member is partially or completely enclosed by at least two layers comprising a layer of the aqueously-swelling water-sealant composition and an outermost layer of water-permeable resilient substance.

13. A seal as defined in claim 12, wherein the water-permeable resilient substance is sponge rubber.

14. A seal as defined in any of claims 7 to 13, wherein there is at least one area of adhesive on the outside surface of the seal.

15. A seal as defined in claim 14, wherein a release paper is provided on the outer surface of the adhesive.

16. A seal as defined in claim 10, wherein the elongate core member has a hollow rectangular cross section and two areas of the aqueously-swelling water-sealant composition are secured on opposed surfaces of the core member and an adhesive layer is provided on the outside surface of at least one of the composition areas.

17. A process of sealing a gap in a structure to stop water at the gap, the process comprising placing in the gap a water seal according to any of claims 7 to 16 and allowing the seal to swell by absorbing water so as to fill that portion of the gap where the seal is placed.

18. A process as set forth in claim 17, wherein the seal comprises an elongate core member enclosed with a plurality of soft rubber layers including at least one layer of the aqueously-swelling water-sealant composition.

**Revendications**

1. Une composition d'étanchéité à l'eau, gonflant en présence d'eau et destinée à arrêter l'eau à un intervalle dans une structure de bâtiment, la composition comprenant 10 à 40% en poids de caoutchouc dont l'ingrédient principal est du caoutchouc régénéré, 10 à 20% en poids d'un composé silicique, 10 à 60% en poids de bentonite et 10 à 40% en poids d'un plastifiant.

2. Une composition d'étanchéité à l'eau, gonflant à l'eau destinée à servir à arrêter l'eau à un intervalle dans une structure de bâtiment, la composition comprenant 10 à 40% en poids de caoutchouc dont le principal composant caoutchouteux est du caoutchouc régénéré mélangé à des composants mineurs dont au moins un caoutchouc non réticulé est du caoutchouc butyle, du caoutchouc d'halogénure de butyle, du caoutchouc de polyisobutylène, du caoutchouc de terpolymère éthylène/propylène/diène ou du caoutchouc d'éthylène/propylène; 10 à 20% en poids d'un composé silicique; 10 à 60% en poids de bentonite; et 10 à 40% en poids d'un plastifiant.

3. Une composition telle que définie dans la revendication 1, dans laquelle le caoutchouc régénéré comprend du caoutchouc butyle régénéré ou de caoutchouc d'enveloppe pneumatique régénéré.

4. Une composition telle que définie dans la revendication 1, 2 ou 3, dans laquelle le composé silicique comprend au moins un composé choisi parmi de l'anhydride d'acide silicique, de l'acide silicique hydraté et du silicate de calcium.

5. Une composition telle que définie dans la revendication 1, 2, 3 ou 4, dans laquelle le plastifiant est un plastifiant pour caoutchouc régénéré.

6. Une garniture extrudée d'étanchéité à l'eau, gonflant à l'eau, destinée à server à arrêter l'eau à un intervalle dans une structure de bâtiment et fabriquée à l'aide d'une composition selon l'une quelconque des revendications précédentes.

7. Une garniture d'étanchéité à l'eau destinée à servir à arrêter l'eau à un intervalle dans une structure de bâtiment, la garniture d'étanchéité comprenant une partie centrale allongée ayant une grande résistance à la traction, et au moins une couche partielle ou complète d'une composition d'étanchéité à l'eau, gonflant à l'eau, la composition d'étanchéité à l'eau, gonflant à l'eau, étant une composition selon l'une quelconque des revendications 1 à 4.

8. Une garniture d'étanchéité telle que définie dans la revendication 7, dans laquelle la partie centrale allongée est formée d'un ou plusieurs des constituants suivants: du caoutchouc dur, de la matière plastique dure, du caoutchouc alvéolaire ou de la mousse de matière plastique.

9. Une garniture d'étanchéité telle que définie dans la revendication 7 ou 8, dans laquelle la partie centrale allongée est pleine et présente une section de forme circulaire, semi-circulaire, carrée, rectangulaire, trapézödale ou en U.

10. Une garniture d'étanchéité telle que définie dans la revendication 7 ou 8, dans laquelle la partie centrale allongée est creuse et présente une périphérie externe ayant en coupe une forme circulaire, semi-circulaire, carrée, rectangulaire, trapézödale ou en U.

11. Une garniture d'étanchéité telle que définie dans l'une quelconque des revendications 7 à 10, dans laquelle la partie centrale allongée est entourée par la couche de composition d'étanchéité à l'eau gonflant à l'eau.

12. Une garniture d'étanchéité telle que définie dans l'une quelconque des revendications 7 à 10, dans laquelle la partie centrale allongée est partiellement ou entièrement entourée par ou moins deux couches comprenant une couche de la composition d'étanchéité à l'eau, gonflant à l'eau et une couche externe d'une substance élastique perméable à l'eau.

13. Une garniture d'étanchéité telle que définie dans la revendication 12, dans laquelle la substance élastique perméable à l'eau est du caoutchouc spongieux.

14. Garniture d'étanchéité telle que définie dans l'une quelconque des revendications 7 à 13, dans laquelle il existe au moins une zone d'adhésif sur la surface externe de la garniture d'étanchéité.

15. Une garniture d'étanchéité telle que définie dans la revendication 14, dans laquelle il est prévu un papier à enlever sur la surface externe de l'adhésif.

16. Une garniture d'étanchéité telle que définie dans la revendication 10, dans laquelle la partie centrale allongée présente une section rectangulaire creuse; deux zones de la composition d'étanchéité à l'eau, gonflant à l'eau, sont fixées sur des surfaces opposées de la partie centrale et une couche d'adhésif est appliquée sur la surface d'au moins une des zones comportant de la composition d'étanchéité.

17. Un procédé pour rendre étanche un intervalle dans une structure afin d'arrêter l'eau à l'intervalle, le procédé comprenant le placement, dans l'intervalle, d'une garniture d'étanchéité à l'eau selon l'une

12

quelconque des revendications 7 à 16, et permettant à la garniture d'étanchéité de gonfler, par absorption d'eau, de manière à emplir la partie de l'intervalle dans laquelle la garniture d'étanchéité est placée.

18. Un procédé tel que spécifié dans la revendication 17, dans lequel la garniture d'étanchéité comprend une partie centrale allongée, entourée de plusieurs couches de caoutchouc mou comportant au moins une couche de la composition d'étanchéité à l'eau qui gonfle à l'eau.

## Patentansprüche

1. In Wasser quellbare Fugendichtungsmasse zur Unterbindung des Wasserdurchtrittes an einer Fuge in Bauwerken, dadurch gekennzeichnet, daß sie aus 10 bis 40 Masse-% Kautschuk, dessen Hauptbestandteil regenerierter Kautschuk ist, 10 bis 20 Masse-% einer Siliziumverbindung, 10 bis 60 Masse-% Bentonit und 10 bis 40 Masse-% Weichmacher besteht.

2. In Wasser quellbare Fugendichtungsmasse zur Unterbindung des Wasserdurchtrittes an einer Fuge in Bauwerken, dadurch gekennzeichnet, daß sie aus 10 bis 40 Masse-% Kautschuk, dessen Hauptbestandteil regenerierter Kautschuk im Gemisch mit geringern Anteilen wenigstens eines nicht vernetzten Kautschukes, der Gruppe Butylkautschuk, Butylhalogenidkautschuk, Polyisobutylenkautschuk, Äthylen-Propylen-Dien-Terpolymerkautschuk oder Äthylen-Propylenkautschuk ist, 10 bis 20 Masse-% einer Siliziumverbindung, 10 bis 60 Masse-% Bentonit und 10 bis 40 Masse-% Weichmacher besteht.

3. Fugendichtungsmasse nach Anspruch 1, dadurch gekennzeichnet, daß der regenerierte Kautschuk aus regeneriertem Butylkautschuk oder regeneriertem Reifengummi besteht.

4. Fugendichtungsmasse nach den Ansprüchen 1, 2 oder 3, dadurch gekennzeichnet, daß die Siliziumverbindung wenigstens eine Verbindung der Gruppe wasserfreie Kieselsäure, wasserhaltige Kieselsäure und Kalziumsilikat ist.

5. Fugendichtungsmasse nach den Ansprüchen 1, 2, 3 oder 4, dadurch gekennzeichnet, daß der Weichmacher ein Weichmacher für regenerierten Kautschuk ist.

6. Stranggepreßte in Wasser quellbare Wasserdichtung zur Unterbindung des Wasserdurchtrittes an einer Fuge eines Bauwerkes und hergestellt mit einer Fugendichtungsmasse nach einem der vorhergehenden Ansprüche.

7. Fugendichtung zur Unterbindung des Wasserdurchtrittes an einer Fuge eines Bauwerkes bestehend aus einem langgestreckten Kernteil mit hoher Zugfestigkeit und wenigstens einer teilweisen oder vollständigen Schicht aus einer in Wasser quellbaren Fugendichtungsmasse, wobei die in Wasser quellbare Fugendichtungsmasse eine Masse nach einem der Ansprüche 1 bis 4 ist.

8. Fugendichtung nach Anspruch 7, dadurch gekennzeichnet, daß der langgestreckte Kernteil aus Hartgummi, Hartkunststoff, Schaumgummi oder Schaumkunststoff besteht.

9. Fugendichtung nach Anspruch 7 oder 8, dadurch gekennzeichnet, daß der langgestreckte Kernteil massiv ist und einen kreisförmigen, halbkreisförmigen, quadratischen, rechteckigen, trapezförmigen oder U-förmigen Querschnitt besitzt.

10. Fugendichtung nach Anspruch 7 oder 8, dadurch gekennzeichnet, daß der langgestreckte Kernteil hohl ist und seine Außenfläche einen kreisförmigen, halbkreisförmigen, quadratischen, rechteckigen, trapezförmigen oder U-förmigen Querschnitt besitzt.

11. Fugendichtung nach einem der Ansprüche 7—10, dadurch gekennzeichnet, daß der langgestreckte Kernteil in der in Wasser quellbaren Fugendichtungsmasse eingeschlossen ist.

12. Fugendichtung nach einem der Ansprüche 7—10, dadurch gekennzeichnet, daß der langgestreckte Kernteil teilweise oder zur Gänze in wenigstens zwei Schichten, bestehend aus einer Schicht aus der in Wasser quellbaren Fugendichtungsmasse und einer Außenschicht aus einem wasserdurchlässigen elastischen Stoff, eingeschlossen ist.

13. Fugendichtung nach Anspruch 12, dadurch gekennzeichnet, daß der wasserdurchlässige elastische Stoff Schaumgummi ist.

14. Fugendichtung nach einem der Ansprüche 7—13, dadurch gekennzeichnet, daß die Außenfläche der Dichtung wenigstens eine Klebstoffzone aufweist.

15. Fugendichtung nach Anspruch 14, dadurch gekennzeichnet, daß auf der Außenfläche des Klebstoffes ein Abziehpapier vorgesehen ist.

16. Fugendichtung nach Anspruch 10, dadurch gekennzeichnet, daß der langgestreckte Kernteil einen hohlen rechteckigen Querschnitt aufweist und zwei Schichten der durch Wasser quellbaren Fugendichtungsmasse an entgegengesetzten Außenflächen des Kernteiles befestigt sind und daß eine Klebstoffschicht auf de Außenseite von wenigstens einer der Dichtungsmasseflächen aufgebracht ist.

17. Verfahren zur Abdichtung einer Fuge in einem Bauwerk zur Unterbindung des Wasserdurchtrittes durch die Fuge, dadurch gekennzeichnet, daß man in die Fuge eine Fugendichtung nach den Ansprüche 7 bis 16 einsetzt und die Dichtung durch Wasseraufnahme quellen läßt, so daß der Teil der Fuge, in den die Dichtung eingesetzt ist, ausgefüllt wird.

18. Verfahren nach Anspruch 17, dadurch gekennzeichnet, daß die Dichtung aus einem laggestreckten Kernteil, der in einer Vielzahl von Weichgummischichten, die wenigstens eine Schicht der in Wasser quellbaren Fugendichtungsmasse enthalten, eingeschlossen ist.

FIG.1 FIG.2 FIG.3 FIG.4 FIG.5 FIG.6 FIG.7 FIG.8 FIG.9 FIG.10

FIG_11

FIG_12

FIG_13

FIG_14

FIG_15

FIG_16

FIG_17

FIG_18

FIG_19

**FIG. 20**

**FIG. 21**

**FIG. 22**

**FIG. 23**

**FIG. 24**

FIG.25

FIG.26

FIG.28

FIG.27

## FIG.29

## FIG.30